# EUROPÄISCHE PATENTSCHRIFT

(11) **EP 3 191 722 B1**
(45) Veröffentlichungstag und Bekanntmachung des Hinweises auf die Patenterteilung: **23.06.2021**
(21) Anmeldenummer: 15777882.0
(22) Anmeldetag: 11.09.2015
(51) Int. Cl.: F16B 7/18, B29D 30/06, F16B 37/04, F16B 3/04, B65G 7/12, F16B 5/02

(54) **KLEMMVORRICHTUNG EINER VULKANISIERPRESSE**
CLAMPING MECHANISM OF A VULCANIZING PRESS
DISPOSITIF DE BLOCAGE D'UNE PRESSE DE VULCANISATION

(30) Priorität: 12.09.2014 DE 202014007293 U; 12.09.2014 US 201462049773 P
(43) Veröffentlichungstag der Anmeldung: 19.07.2017
(73) Patentinhaber: Rema Tip Top AG, 85586 Poing (DE)
(72) Erfinder: SCHEUNGRABER, Patric, 85652 Pliening (DE)
(74) Vertreter: MERH-IP Matias Erny Reichl Hoffmann Patentanwälte PartG mbB
(86) Internationale Anmeldenummer: PCT/EP2015/070821
(87) Internationale Veröffentlichungsnummer: WO 2016/038185

(56) Entgegenhaltungen:
- WO-A1-97/48937
- DE-A1- 2 220 272
- DE-A1- 2 946 249
- DE-A1- 10 342 552
- FR-A1- 2 438 193
- GB-A- 1 200 132
- JP-B2- 3 254 100
- US-A- 1 909 400
- US-A1- 2004 217 609
- US-B1- 6 422 623
- US-B1- 6 921 325

## Beschreibung

Die vorliegende Erfindung betrifft eine Klemmvorrichtung einer mobilen Vulkanisierpresse und eine mobile Vulkanisierpresse. Die Mutter der Klemmvorrichtung hat insbesondere den technischen Vorteil, dass sie robust ist, ein relativ geringes Gewicht aufweist, eine im Hinblick auf eine optimierte Ergonomie und einen guten Arbeitsschutz gewählte Formgebung hat und unverlierbar mit der Klemmvorrichtung verbunden werden kann, ohne dass dafür zusätzliche Sicherungsmittel verwendet werden müssten. Die Klemmvorrichtung ist insbesondere relativ leicht, weniger komplex zu handhaben und ist im Hinblick auf eine lange Lebensdauer sehr robust. Die Vulkanisierpresse weist zudem Traversen(-hohlprofile) auf, die ebenfalls gewichtsoptimiert gestaltet sind.

Bekannte Vulkanisierpressen weisen beheizbare Platten (Heizplatten) auf, die oberhalb und unterhalb eines zu vulkanisierenden Produktes angeordnet sind. Das zu vulkanisierende Produkt kann beispielsweise ein Förderband für den Einsatz im Tagebau sein. Die Heizplatten erzeugen die notwendige Temperatur zur Durchführung der Vulkanisierung. Der notwendige mechanische Druck für die Vulkanisierung wird beispielsweise mittels luft- oder flüssigkeitsgefüllter Druckkissen aufgebaut. Sowohl die Heizplatten als auch das Druckkissen sind zwischen sogenannten Traversen bzw. Traversenhohlprofilen angeordnet, die die Heizplatten und Druckkissen fixieren. Die Heizplatten sind jeweils oberhalb und unterhalb des zu vulkanisierenden Produktes angeordnet. Der vorbeschriebene Aufbau mit den Heizplatten, dem Druckkissen, dem zu vulkanisierenden Produkt und den Traversenhohlprofilen wird mittels Klemmvorrichtungen zusammen gehalten, die die oberen und unteren Traversenhohlprofile miteinander verbinden.

Das Verbinden bekannter Klemmvorrichtungen mit den bekannten Traversenhohlprofilen ist aufwendig, da unter anderem lose Sicherungsstifte montiert werden müssen. Die Sicherungsstifte werden durch Bohrungen in den Traversen eingebracht, um das Abgleiten der Bolzen-/Mutterneinheit aus der Traverse zu verhindern. Das Einbringen der losen Sicherungsstifte nimmt viel Zeit in Anspruch, so dass die Rüstzeiten erhöht werden. Zudem können die relativ kleinen Sicherungsstifte leicht verloren gehen. Das Verspannen der Zugbolzen und das Einsetzen der losen Sicherheitsstifte sind ferner auch im Hinblick auf die Arbeitssicherheit und die Vermeidung von Verletzungen des Monteurs nicht optimal, da sich der Monteur zum Beispiel beim Einfädeln der losen Sicherheitsstifte leicht an den Kanten der Zugbolzen, Traversenhohlprofile und dgl. verletzen kann.

Ferner sind die einzelnen Bauteile bekannter Vulkanisierpressen, insbesondere die Zugbolzen und die Traversenhohlprofile relativ schwer und damit schwieriger zu handhaben. Bekannte Zugbolzen aus Kohlenstoff sind zudem bruchanfällig, was bei den oftmals harsche Arbeitsbedingungen und Belastungen, die solche Bauteile aushalten müssen, zu Defekten führen kann. Beispielsweise werden die einzelnen Bauteile im Arbeitsalltag häufig fallen gelassen öder auf Lagerplätze geworfen, was die Zugbolzen, Traversenhohlprofile und dgl. hohen mechanischen Belastungen, neben denen im Betrieb selbst, aussetzt.

Ferner beschreibt die US 1909 400 A einen Sicherungsmechanismus für Elemente, die mittels Gewindeverbindung miteinander verbunden werden, insbesondere einen verbesserten Verschluss. Die DE 22 20 272 A1 beschreibt ein Sicherungselement für Schraubverbindungen von Maschinenteilen, insbesondere aus einem Schraubenbolzen und einer Schraubenmutter, bestehend aus einer unter Anpressdruck mindestens stellenweise in das Gewinde des Bolzenteiles und in eine Ausdrehung des Mutterteiles eingreifenden Drahtfeder, die mindestens an einer Stelle durch einen im Mutterteil vorhandenen Schlitz radial nach außen vorsteht, um beim Zurückdrücken dieses vorspringenden Teiles ein Lösen eines Drahtfederschenkels aus dem Bolzengewinde zu bewirken. Die US 6 921325 B1 beschreibt ferner eine Zieh- bzw. Transportvorrichtung.

Es ist eine Aufgabe der vorliegenden Erfindung eine Klemmvorrichtung und eine mobile Vulkanisierpresse bereitzustellen, die weniger aufwendig und komplex handhabbar sind und dabei einen höheren Arbeitsschutz bieten, robuster und damit, auch unter harschen Einsatzbedingungen langlebiger sind und gleichzeitig weniger Gewicht aufweisen.

Die Aufgabe wird von der Erfindung gemäß den Patentansprüchen 1 und 9 gelöst.

Weitere bevorzugte Weiterentwicklungen der Erfindung werden von den weiteren abhängigen Ansprüchen beschrieben.

Insbesondere umfasst ist eine Klemmvorrichtung einer mobilen Vulkanisierpresse, die auch eine Mutter umfasst. Die Mutter kann einen Mutterkörper aufweisen. Der (Mutter-)Körper kann ein Sackloch mit einem Innengewinde zur Aufnahme eines Zugbolzens aufweisen. Es kann eine Nut vorgesehen sein, die bevorzugt zu dem Sackloch hin offen ist. Die Nut kann in einem Umfangsabschnitt des Sackloches angeordnet sein. Mit anderen Worten kann die Nut einen Umfangsbereich des Sackloches umfassen. Besonders bevorzugt ist die Nut ringförmig. Besonders bevorzugt kann die zum Sackloch hin offene Nut einmal entlang einer inneren Oberfläche des Sackloches umlaufen; dabei verläuft die Nut bevorzugt senkrecht zur Längsachse des Sackloches. Ferner kann die Mutter eine Zugangsbohrung haben, die eine Außenseite des Mutterkörpers mit der Nut verbinden kann. Die Außenseite kann bevorzugt die seitliche Außenfläche bzw. die Mantelfläche der Mutter sein. Die Nut und/oder die Zugangsbohrung können dazu geeignet sind, ein Fixierelementaufzunehmen. Bevorzugt sind die Nut und die Zugangsbohrung damit so beschaffen, dass beide zusammen einen Hohlraum bilden, in dem das Fixierelement (durchgehend) platziert werden kann.

Die erfindungsgemäße Mutter hat den Vorteil, dass sie mit einem Zugbolzen unverlierbar verbunden sein kann. Die Nut ist bevorzugt in einem Abschnitt des Sackloches angeordnet, der benachbart zu einer Öffnung des Sackloches liegt, bzw. der möglichst nah zu der Öffnung des Sackloches angeordnet ist. Insbesondere kann das in die Nut einsetzbare Fixierelement den in das Sackloch eingedrehten Zugbolzen technisch vorteilhaft unverlierbar festhalten. Es bedarf somit keiner weiteren Sicherungsmittel, die schwierig handhabbar sind und die im Hinblick auf die Verletzungsgefahr für den Monteur ungünstig sind. Die Mutter ist ferner bevorzugt aus einem hochfesten Stahl gefertigt, so dass ein geringes Gewicht erreicht werden kann. Ein weiterer Vorteil der Erfindung ist es, dass das Fixierelement auch eine Dichtungsfunktion übernehmen kann. Mit anderen Worten kann das Fixierelement die Mutter und einen Zugbolzen unverlierbar verbunden halten und gleichzeitig die Gewindeverbindung gegenüber Staub-, Schmutz- und/oder Wassereintritt abdichten. Das Fixierelement kann somit besonders bevorzugt als ein Fixier- und Dichtungselement fungieren.

Ferner kann ein Fixierelement derart in der Nut und der Zugangsbohrung angeordnet sein, dass das Fixierelement die Nut teilweise oder vollständig belegen kann und das Fixierelement ferner zumindest einen Teilabschnitt der Zugangsbohrung belegen kann. Mit anderen Worten kann das Fixierelement in dem Hohlraum, den die Zugangsbohrung und die Nut bilden, angeordnet sein, wobei das Fixierelement den Teil des Hohlraumes, der von der Zugangsbohrung gebildet wird, bevorzugt nur teilweise ausfüllt.

Die Zugangsbohrung ist bevorzugt derart beschaffen, dass von einer Seitenfläche der Mutter ein Bohrkanal bis zu der Nut verläuft. Der Bohrkanal bzw. die Zugangsbohrung weist bevorzugt ein Innengewinde auf, so dass darin ein Befestigungsmittel eingeschraubt werden kann.

Das Fixierelement ist mit dem Befestigungsmittel verbunden. Das Befestigungsmittel ist bevorzugt eine Schraube bzw. Hülse mit Außengewinde, so dass das Befestigungsmittel mittels Schraubbewegung innerhalb der Zugangsbohrung bewegt werden kann. Bevorzugt ist das Befestigungsmittel vollständig innerhalb der Zugangsbohrung angeordnet. Eine Relativposition des Befestigungsmittels in der Zugangsbohrung kann, insbesondere mittels der oben beschriebenen Schraubverbindung zwischen Zugangsbohrung und Befestigungsmittel, einstellbar sein. Das Befestigungsmittel kann derart mit dem Fixierelement verbunden sein, dass eine Veränderung der Relativposition des Befestigungsmittels eine Dehnung oder eine Stauchung des das Fixierelementes herbeiführen kann. Mit anderen Worten kann gemäß diesem alternativen Beispiel das Fixierelement innerhalb der Zugangsbohrung mit einem Abschnitt mit dem Befestigungsmittel verbunden sein und mit einem anderen Abschnitt innerhalb der Nut angeordnet sein. Bei einem Verändern der Relativposition des Befestigungsmittels innerhalb der Zugangsbohrung wird aufgrund der Verbindung zwischen dem Fixierelement und dem Befestigungsmittel eine Zugkraft und damit eine Dehnung auf das Fixierelement aufgebracht, die dazu führt, dass sich das Fixierelement innerhalb der Nut zusammenzieht. Mit anderen Worten wird beim Verändern der Relativposition des Befestigungsmittels mit dem daran montierten Fixierelement eine Schlinge, die das Fixierelement innerhalb der Nut/des Sackloches bildet, zusammengezogen, d.h. deren Durchmesser wird verkleinert. Andersherum kann der Durchmesser der Schlinge vergrößert werden, wenn die Relativposition des Befestigungsmittels in die andere Richtung verändert wird. Noch konkreter wird bevorzugt bei einem Herausdrehen des Befestigungsmittels, d.h. bei einer Veränderung der Relativposition des Befestigungsmittels weg von der Nut, die Schlinge, die das Fixierelement in der Nut bildet, zusammengezogen. Bei einem Eindrehen wird die Schlinge gelockert/geweitet.

Bevorzugt kann der oben beschriebene Effekt des Zusammenziehens oder Weitens der Schlinge dadurch unterstützt werden, dass das Fixierelement an einem Ende, das dem Ende, das mit dem Befestigungsmittel verbunden ist, gegenüberliegt, festgehalten wird. Beispielsweise kann dazu in der Nut eine Verjüngung vorgesehen sein, die das Fixierelement in dem verjüngten Bereich festklemmt. Ferner kann beispielsweise auch eine Klebe- oder Schraubverbindung vorgesehen sein, die ein Ende des Fixierelementes in der Nut festhält.

Beide oben beschriebenen Beispiele ermöglichen, dass das Fixielement eine Schlinge um den Zugbolzen legt, die den eingedrehten Zugbolzen gegen ein Verlieren sichert. Mittels eines Zusammenziehens der Fixierelementschlinge kann die Schlinge auch nachträglich (z.B. nach einer Montage der Klemmvorrichtung) eingestellt werden, um den Zugbolzen zuverlässig gegen ein Verlieren zu sichern. Das Zusammenziehen der Schlinge ist wenig aufwendig dadurch ausführbar, dass ein Monteur ein geeignetes Schraubwerkzeug von außen in die Zugangsbohrung einführt und das Befestigungsmittel mittels des Schraubwerkzeugs in seiner Relativposition verändert.

Ferner ist es vorteilhaft, dass das Befestigungsmittel vollständig in der Zugangsbohrung versenkt ist, da somit keine Teile des Sicherungsmechanismus' von der Außenfläche der Mutter abstehen. Dies reduziert die Verletzungsgefahr und ermöglicht einen passgenauen Einbau in Traversenhohlprofile, wie es nachfolgend noch genauer beschrieben wird.

Ein weiterer technischer Vorteil des oben beschriebenen Fixierelementes kann zudem sein, dass dieses auch gleichzeitig eine Staub- und Schmutzabdichtung ermöglicht. Dies erhöht die Lebensdauer der Mutter und des Zugbolzens bzw. des Gewindes, da beispielsweise Schmutzpartikel das Gewinde der Mutter nicht mehr zusetzen.

Bevorzugt ist das Fixierelement bandförmig und das Material des Fixierelementes umfasst bevorzugt Filz oder Kunststoff, bevorzugt einen Elastomer. Ferner kann das Fixierelement auch eine Vielzahl Kugeln aufweisen, die aus Metall oder Kunststoff gefertigt sein können.

Die Bandform, die bevorzugt ein längliches Dichtungsstück mit zwei Enden beschreiben soll, bringt den Vorteil mit sich, dass das Fixierelement mit wenig Aufwand in die Nut und die Zugangsbohrung eingeschoben werden kann. Das Material, bevorzugt Filz, weist hervorragende Eigenschaften hinsichtlich der Sicherung des Zugbolzens und der Abdichtung gegenüber Schmutzpartikeln auf und verhindert ferner, dass das Fixierelement beim Zusammenziehen der Schlinge den Zugbolzen verkratzt oder beschädigt.

Wenn das Fixierelement aus einer Vielzahl Kugeln gebildet wird, können diese mit sehr wenig Aufwand während einer Vormontage des Zugbolzens und der Mutter über die Durchgangsbohrung in die Nut eingeführt werden. Es werden dazu bevorzugt mindestens so viele Kugeln eingeführt, dass die Nut teilweise, bevorzugt vollständig, belegt ist und der Zugbolzen sicher in der Mutter festgehalten wird. Das Befestigungsmittel kann nach dem Einführen der Kugeln in die Durchgangsbohrung eingeschraubt werden, um die Kugeln in der vorbestimmten Position innerhalb der Nut festzuhalten.

Die Oberflächen der beiden Axialenden des Mutterkörpers können plan sein und parallel zueinander angeordnet sein. In einer der beiden Oberflächen kann eine bzw. die Öffnung des Sackloches angeordnet sein. Die Mutter weist bevorzugt eine Längsachse auf, die besonders bevorzugt auch eine Symmetrieachse bildet. Die Längsachse fällt besonders bevorzugt mit einer Längsachse des Sackloches übereinander. Die beiden Endabschnitte der Mutter entlang deren Längsachse sollen hier bevorzugt als Axialenden des Mutterkörpers verstanden werden. Die Oberfläche des Axialendes, an dem das Sackloch eingelassen ist, ist die Fläche, über die eine Druckkraft auf ein Traversenhohlprofil aufgebraucht wird. Die plane Ausführung dieser Fläche hat damit den Vorteil, dass die Druckkraft sehr homogen und ohne Spannungsspitzen erzeugt werden kann.

Alternativ kann die Oberfläche des Mutterkörpers, die eine Öffnung des Sackloches aufweist, eine nach außen gebogene bzw. gekrümmte Form aufweisen. Wenn ein Traversenhohlprofil einer Vulkanisierpresse eine Vertiefung mit einer gekrümmten Oberfläche aufweist, die an die nach außen gekrümmten Form der Oberfläche des Mutterkörpers angepasst ist, so können die beiden gekrümmten Oberflächen wie ein Gelenkkopf und eine Gelenkpfanne zueinander angeordnet werden. Dies erlaubt es, dass eine Winkelstellung des Zugbolzens zu dem Traversenhohlprofil eingestellt werden kann.

Ferner kann eine Fläche beider Oberfläche der Axialenden der Mutter jeweils größer sein als eine Querschnittsfläche des Sackloches. Insbesondere im Hinblick auf das Axialende der Mutter, das nicht die Öffnung des Sackloches aufweist, hat dies den Vorteil, dass so eine ergonomische Außenkontur der Mutter ermöglicht wird.

Ferner kann senkrecht zu der Oberfläche, die die Öffnung des Sackloches aufweisen kann, ein Stift fest mit dem Mutterkörper verbundenen sein. Der Stift kann von der Oberfläche senkrecht abstehen. Der Stift ist bevorzugt mit dem Mutterkörper verschweißt, verlötet oder verklebt. Der Stift steht von der Oberfläche ab, um in eine Gegenöffnung eines Traversenhohlprofils eingreifen zu können. Dies ermöglicht es einem Monteur, die Mutter bzw. die Klemmvorrichtung mit wenig Aufwand in dem Traversenhohlprofil zu positionieren. Gleichzeitig verhindert der Stift, dass die Mutter bzw. die Klemmvorrichtung aus der vorgegebenen Position abgleitet. Der Stift fungiert somit als Positionierungshilfe und als Abgleitsicherung. Der vorbeschriebene Stift ist nicht notwendig, wenn die Oberfläche des Mutterkörpers, die das Sackloch aufweist, die oben dargestellte gekrümmte Oberfläche aufweist.

Die Erfindung umfasst ferner eine Klemmvorrichtung für eine mobile Vulkanisierpresse. Die Klemmvorrichtung kann zumindest eine erfindungsgemäße Mutter und einen Zugbolzen aufweisen. Der Zugbolzen kann an seinen beiden axialen Endabschnitten jeweils ein Außengewinde aufweisen, so dass an jeweils einem axialen Ende des Zugbolzens eine Mutter mittels einer Schraubverbindung angeordnet sein kann. Der Zugbolzen kann alternativ auch nur an einem Endabschnitt ein Außengewinde aufweisen und es kann nur eine Mutter an dem Zugbolzen montiert sein.

Die axialen Endabschnitte des Zugbolzens beschreiben hier bevorzugt die beiden Enden des entlang einer Längsachse geformten Zugbolzens. Die Außengewinde des Zugbolzens können besonders bevorzugt nicht vollständig bis zu einer Abschlusskante des Zugbolzens angeordnet sein. Wie bereits oben dargelegt wurde, können die beiden Muttern und der Zugbolzen miteinander mittels deren Innen- bzw. Außenwinden verschraubt sein, d.h. es kann eine Schraubverbindung gebildet sein. Die Fixierelemente der Muttern können den Zugbolzen sicher und unverlierbar festhalten.

Die Länge der Außengewinde des Zugbolzens kann kürzer sein als die Länge bzw. Tiefe des Sackloches der Mutter. Diese bevorzugte Form hat den Vorteil, dass die Schlinge, die das Fixierelement bildet, einen Abschnitt des Zugbolzens umgreifen kann, an dem der Zugbolzen eine glatte Oberfläche aufweist, insbesondere an dem kein Gewinde vorliegt, so dass das Fixierelement nicht beschädigt wird, wenn die Schlinge um den Zugbolzen herum eingeschnürt ist.

Ein Längsabschnitt des Zugbolzens, der sich jeweils an das Außengewinde des Zugbolzens anschließen kann, kann einen Durchmesser haben, der kleiner sein kann als ein Kerndurchmesser des Innengewindes des Sackloches. Mit anderen Worten schließt sich dieser Längsabschnitt axial innen an den Gewindeabschnitt an. Dieser Längsabschnitt, der sich bevorzugt mit dem oben beschriebenen Abschnitt mit glatter Oberfläche überschneidet, kann besonders sicher von der Schlinge des Fixierelementes umfasst und eingeschnürt werden, so dass die Verliersicherung zwischen Mutter und Zugbolzen höchst zuverlässig ist.

Der Zugbolzen kann an beiden axialen Endabschnitten einen Abschlussabschnitt haben, der eine Länge des Bolzens festlegen kann und dessen Durchmesser kleiner sein kann als der Durchmesser des Außengewindes. Mit anderen Worten kann sich der Abschlussabschnitt in axialer Richtung außen an den Längsabschnitt anschließen, der das Außengewinde aufweist. Dieser Abschlussabschnitt kann einen relativ geringen Durchmesser, bevorzugt ist der Durchmesser der kleinste des Zugbolzens, haben und als Stopper innerhalb des Sackloches fungieren. Der Abschlussabschnitt kann bevorzugt mit einem Ende des Sackloches anstoßen, wenn der Zugbolzen weitestmöglich in das Sacklock eingedreht wurde, und damit eine Begrenzung einer Eindrehlänge der Zugbolzens in die Mutter vorgegeben.

Die beiden Außengewinde des Zugbolzens können gegenläufig sein und entsprechend die Gewinde der Muttern. Eine gegenläufige Gewindegestaltung erlaubt es vorteilhafterweise, den Zugbolzen mittig zu greifen und mittels einer Drehbewegung gleichzeitig in beide Muttern einzudrehen. Dies reduziert den Aufwand beim Verspannen der Klemmvorrichtung mit Traversenhohlprofilen erheblich.

Ein mittig angeordneter Längsabschnitt des Zugbolzens kann einen Außensechskant aufweisen. Das oben genannte Verspannen des Zugbolzens wird über den Sechskant, oder eine vergleichbare Schlüsselfläche, weiter vereinfacht, da der Monteur das Verspannen mittels eines Maulschlüssels vornehmen kann.

Der Außensechskant kann integral mit einem Zugbolzenkörper sein. Ferner kann der Zugbolzenkörper ein Hohlkörper sein, der bevorzugt aus hochfestem Stahl besteht. Der Zugbolzen wird dadurch sehr leicht im Vergleich zu Zugbolzen nach dem Stand der Technik, ohne seine mechanische Belastungsfähigkeit einzubüßen. Eine integrale Verbindung wird beispielsweise durch geeignete Umformverfahren in dem mittigen Längsabschnitt des Zugbolzens, in dem der Außensechskant vorgesehen sein soll, erreicht.

Ferner umfasst die Erfindung eine mobile Vulkanisierpresse. Eine mobile Vulkanisierpresse kann insbesondere in Einzelbestandteile zerlegt werden und an einem beliebigen Einsatzort wieder montiert werden. Die Vulkanisierpresse kann zumindest eine erfindungsgemäße Klemmvorrichtung und zumindest zwei Traversenhohlprofilen zur Aufnahme der Klemmvorrichtung umfassen. Die erfindungsgemäße Vulkanisierpresse ist aufgrund der leichten Zugbolzen und Muttern ebenfalls relativ leicht. Weiter kann die Vulkanisierpresse bereits aufgrund der oben beschriebenen vorteilhaften Ausgestaltungen der Klemmvorrichtung mit weniger (Zeit-)Aufwand zusammengebaut werden, wobei auch die Arbeitssicherheit verbessert ist.

Weiter kann die Vulkanisierpresse auch zumindest jeweils eine Heizplatte und ein luft- oder wassergefülltes Druckkissen aufweisen, sowie die dazu benötigten Anschlussleitungen für den elektrischen Strom und das Druckmedium. Eine Steuerungseinheit kann ferner vorhanden sein, die z.B. die Druckbeaufschlagung und die Temperaturprofile für die Vulkanisierung steuert.

Das bzw. die Traversenhohlprofil(e) kann/können an beiden axialen Längsenden eine Aussparung aufweisen, deren Breite größer oder gleich sein kann im Vergleich zu einem vordefinierten Längsabschnitt des Zugbolzens. Das Traversenhohlprofil kann ferner einen rechteckigen Außenquerschnitt aufweisen. Das Traversenhohlprofil kann zudem einen Innenquerschnitt haben, der tonnenförmig sein kann und abgerundete Ecken haben kann. Eine Querschnittsfläche des Innenquerschnittes kann so groß sein, dass darin zumindest eine erfindungsgemäße Mutter anordenbar ist.

Der vordefinierte Längsabschnitt des Zugbolzens ist ein Teil des Zugbolzens, der im Zustand, wenn der Zugbolzen mit den beiden Muttern verbunden ist, aus der Mutter, bevorzugt direkt unterhalb dieser, herausragt. Die Aussparung des Traversenhohlprofils ist zur Seite hin offen, so dass der Zugbolzen seitlich in die Aussparung eingeführt werden kann. Mit anderen Worten wird jeder Mutter der Klemmvorrichtung ein Traversenhohlprofil zugeordnet, so dass die Oberfläche der Mutter, die die Sacklochöffnung aufweist eine Druckkraft auf eine Innenfläche des Traversenhohlprofils ausüben kann. Der Innenquerschnitt des Traversenhohlprofils, d.h. der Querschnitt des Hohlraums der Traverse, kann die Mutter vollständig aufnehmen. Die Ecken sind derart geformt, dass sie mit der Außenkontur der Mutter übereinstimmen können. Dadurch kann eine sehr homogene Spannungsverteilung erzielt werden.

Die Tonnenform des Innenquerschnittes reduziert ferner den Materialeinsatz, so dass auch die Traversenhohlprofile gewichtsoptimiert sind. Ferner weist/weisen die Innenfläche(n) des Traversenhohlprofils, an der Stelle eine Bohrung auf, an der der Stift der Mutter aufgenommen werden soll, um eine Hilfe für das Positionieren der Mutter und eine Abgleitsicherung der Mutter zu realisieren.

Ferner kann ein Rack, das als Positionierungshilfe für das Positionieren der Traversenhohlprofile dienen kann, vorgesehen sein, das einen Längskörper aufweisen kann, der an einer Oberseite eine Vielzahl Vorstehungen haben kann. An beiden Längsenden des Längskörpers des Racks kann jeweils ein pfeilförmiges Abschlussblech angeordnet sein.

Das Rack ist besonders vorteilhaft in der Hinsicht gestaltet, dass das pfeilförmige Abschlussblech eine Anordnung der Traversen auf dem Rack in beide Förderrichtungen zulässt. Der Hintergrund dazu ist, dass die Traversenhohlprofile schräg zueinander angeordnet werden und herkömmliche Racks nur das Ausrichten der Traversenhohlprofile in eine Richtung ermöglichten. Die optionalen Vorstehungen können in passende Ausnehmungen der Traversenhohlprofile eingreifen, um die Traversenhohlprofile sicher in ihrer Position zu halten.

Zusammenfassend ermöglicht die Erfindung somit, dass eine Mutter für eine Klemmvorrichtung bereitgestellt wird, die insbesondere unverlierbar ohne zusätzliche Sicherungsmittel mit dem Zugbolzen verbunden ist. Die integrierte Verliersicherung zwischen der Mutter und dem Zugbolzen übernimmt zudem die technische Funktion der Abdichtung des Sackloches, so dass die Gewindeverbindung zwischen dem Zugbolzen und der Mutter nicht mit Schmutz zugesetzt wird. Ferner wird die mobile Vulkanisierpresse bereitgestellt, die u.a. weniger aufwendig montierbar und handhabbar ist.

Die Erfindung wird im Folgenden exemplarisch mit Bezug auf die beigefügten, schematischen Zeichnungen beschrieben. Es zeigen
Fig. 1a eine Klemmvorrichtung,
Fig. 1b einen vergrößerten Ausschnitt einer Mutter der Klemmvorrichtung,
Fig. 2a eine Draufsicht auf eine Vorderseite eines Traversenhohlprofiles,
Fig. 2b einen Schnitt durch eine an zwei Traversenhohlprofilen montierte Klemmvorrichtung sowie eine Schnittdarstellung A-A,
Fig. 2c eine Draufsicht auf eine Vorderseite der zwei Traversenhohlprofile mit einer montierten Klemmvorrichtung,
Fig. 3 eine perspektivische Ansicht der zwei Traversenhohlprofile mit einer
   montierten Klemmvorrichtung,
Fig. 4a eine perspektivische Ansicht eines Racks,
Fig. 4b eine Seitenansicht des Racks,
Fig. 4c eine Draufsicht des Racks,
Fig. 4d eine Frontansicht des Racks,
Fig. 5a eine perspektivische Ansicht einer Tragevorrichtung gemäß einem Beispiel für ein besseres Verständnis der Erfindung und
Fig. 5b eine Seitenansicht dieser Tragevorrichtung gemäß dem Beispiel für ein besseres Verständnis der Erfindung.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Beispiele begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

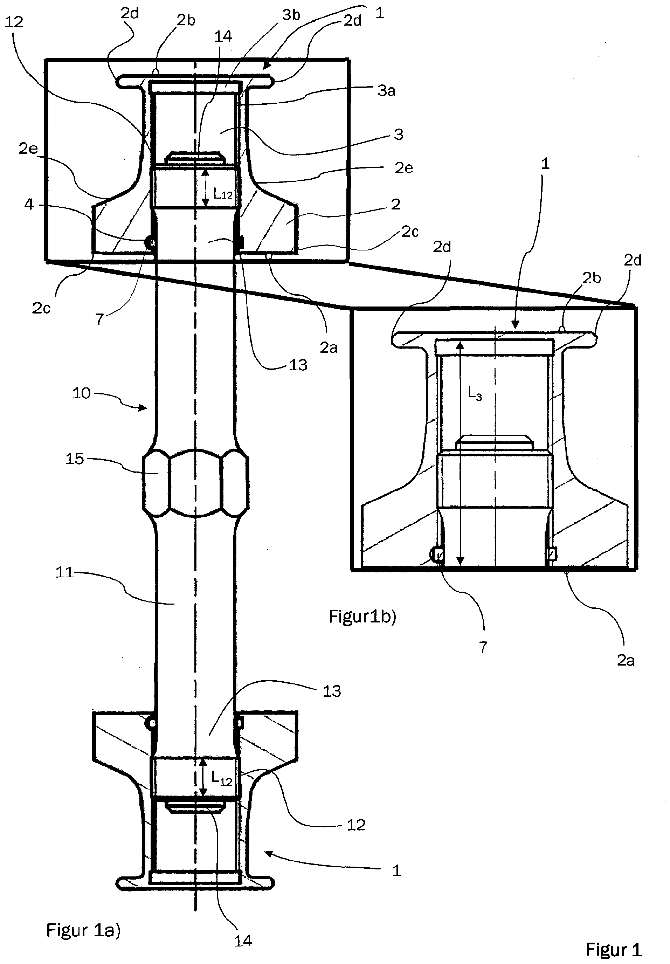

Figur 1a zeigt eine Klemmvorrichtung 10 mit zwei Muttern 1 und einem Zugbolzen 11. Endabschnitte des Zugbolzens 11 sind jeweils in ein Sackloch 3 der Muttern 1 eingeschraubt. Dazu weist das Sacklock 3 ein Innengewinde 3a und der Zugbolzen 11 an jeder seiner Endabschnitte ein Außengewinde 12 auf. Der Zugbolzen ist bevorzugt zwischen 200 und 400 mm, besonders bevorzugt zwischen 250 und 350 mm und ganz besonders bevorzugt zwischen 280 und 320 mm lang. Das Gewicht des Zugbolzens, der bevorzugt aus hochfestem Stahl gefertigt ist, liegt bevorzugt zwischen 1 und 6 kg, besonders bevorzugt zwischen 2 und 5 kg und ganz besonders bevorzugt zwischen 3 und 4,5 kg.

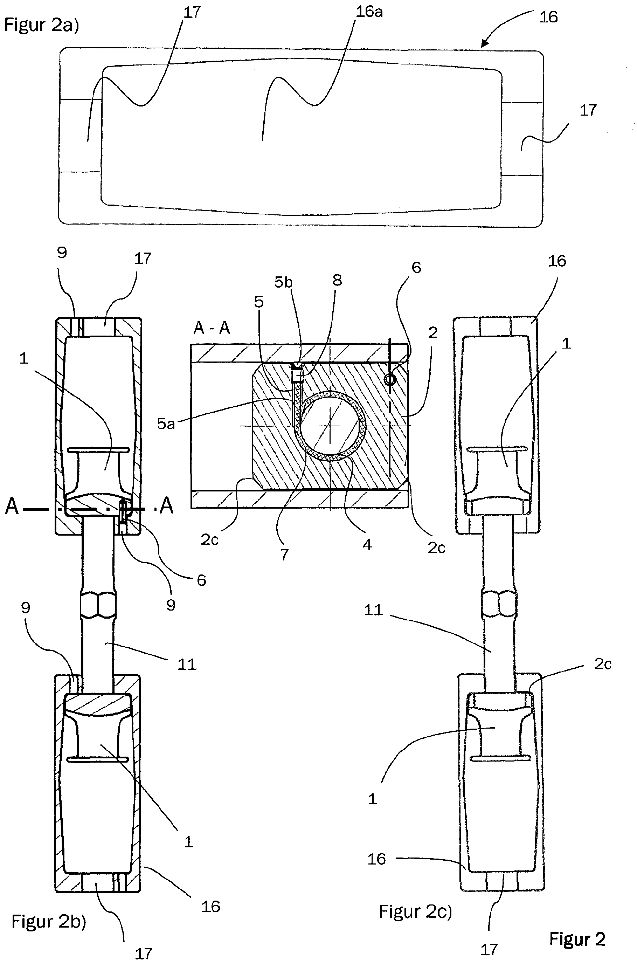

Ein Fixierelement 7 hält einen Längsabschnitt 13 des Zugbolzens 11 unverlierbar mit der Mutter 1 verbunden. Der Längsabschnitt 13 schließt sich bevorzugt unmittelbar an das Außenwinde 12 an. Das Außengewinde 12 ist in Längsrichtung des Zugbolzens 11 bevorzugt zwischen 10 und 30 mm, besonders bevorzugt zwischen 15 und 30 und ganz besonders bevorzugt zwischen 20 und 30 mm lang. Das Außengewinde 12 ist bevorzugt zwischen M35 und M55, besonders bevorzugt zwischen M40 und M50 und ganz besonders bevorzugt zwischen M40 und M45. Ferner können auch andere Gewindearten, -formen und/oder -ausführungen verwendet werden. Das Fixierelement 7 ist in der Nut 4 und einer in Figur 2 sichtbaren Zugangsbohrung 5 angeordnet. Die Nut 4 ist besonders gut in dem vergrößerten Ausschnitt, den Figur 1b zeigt, zu erkennen. Die Nut 4 ist entlang einer inneren Oberfläche des Sackloches 3 angeordnet und verläuft senkrecht zu einer mit einer gestrichelten Linie dargestellten Längsachse des Sackloches 3. Das in Figur 1b gezeigte Fixierelement 7 hat einen rechteckigen Querschnitt und kann teilweise aus der Nut 4 heraus- und in das Sackloch 3 hineinstehen oder den gleichen Querschnitt wie die Nut 4 aufweisen. Die Zugangsbohrung 5 und die Nut 4 können bevorzugt die gleiche Flächengröße des Querschnitts aufweisen. Die Nut 4 und die Zugangsbohrung 5 können einen runden Querschnitt mit einem Durchmesser von bevorzugt zwischen 2 bis 10 mm, besonders bevorzugt zwischen 2 bis 6 mm und ganz besonders bevorzugt zwischen 3 und 5 mm aufweisen. Es sei angemerkt, dass das Fixierelement 7 auch andere Querschnittsformen, wie z.B. eine runde oder eine ovale Form, aufweisen kann. Das Fixierelement 7, das in der Nut 4 verläuft, bildet eine im Zusammenhang mit Figur 2 noch näher dargelegte Schlinge, die sich um den Längsabschnitt 13 des Zugbolzens 11 legen kann. Diese Schlinge hält die Mutter 1 sicher und unverlierbar mit dem Zugbolzen verbunden.

Eine Länge bzw. Tiefe L3 des Sackloches ist, wie Figur 1b zudem zeigt, länger als eine Länge L12 des Außengewindes des Zugbolzens 11. L3 ist bevorzugt zwischen 60 und 100 mm, besonders bevorzugt zwischen 70 und 90 mm und ganz besonders bevorzugt zwischen 80 und 90 mm. Dies ermöglicht eine Flexibilität bei der Tiefe des Eindrehens des Zugbolzens 11 in die Mutter 1 (dem Verspannen) insofern, dass sichergestellt werden kann, dass das Fixierelement 7 möglichst an dem glatten Längsabschnitt 13 des Zugbolzens 11 aufsitzt. Dadurch wird vorteilhaft vermieden werden, dass das Fixierelement 7 im montierten Zustand des Zugbolzens 11 an dem Außengewinde 12 des Zugbolzens 11 aufsitzt. Das Außengewinde 12 könnte mit der relativ scharfkantigen Gewindeaußenfläche zu einer Verletzung des Fixierelementes rühren. Der glatte Längsabschnitt 13, an dem das Fixierelement 7 bevorzugt im montierten Zustand des Zugbolzens 11 und der Mutter 1 aufsitzt, weist einen gegenüber dem Außengewinde 12 verjüngten Durchmesser auf. Der verjüngte Durchmesser ist bevorzugt zwischen 30 und 50 mm, besonders bevorzugt zwischen 35 und 45 und ganz besonders bevorzugt zwischen 38 und 42 mm groß. Das Fixierelement 7 kann diesen Bereich somit gut umgreifen und wird nicht von der rauen Gewindeoberfläche verletzt.

Figur 1b zeigt zudem eine bevorzugte äußere Formgebung der Mutter 1, die bzw. deren Körper im Hinblick auf ein möglichst geringes Gewicht und eine gute Ergonomie optimiert wurde. So ist die erfindungsgemäße Mutter 1 bevorzugt aus hochfestem Stahl gefertigt und weist bevorzugt ein Gewicht zwischen 1 und 4 kg und besonders bevorzugt zwischen 2 und 3 kg und ganz besonders bevorzugt zwischen 2 und 2,5 kg auf. Bevorzugt sind die beiden Oberflächen 2a und 2b, wie in der Figur dargestellt, parallel zueinander angeordnet und eben ausgeführt. Die Oberfläche 2a, die an einem der (Längs-)Axialendabschnitte der Mutter 1 angeordnet ist, weist die Öffnung 3b des Sackloches 3 auf. Die Oberfläche 2a hat bevorzugt einen im Wesentlichen quadratischen Querschnitt mit einer bevorzugten Kantenlänge zwischen 60 und 100 mm und einer besonders bevorzugten Kantenlänge zwischen 80 und 95 mm. Ganz besonders bevorzugt ist die Kantenlänge zwischen 85 und 90 mm. Die seitlichen Kanten 2c dieser Oberfläche 2a sind bevorzugt abgerundet, wie insbesondere die Figuren 2b und 2c besser zeigen. Ebenso ist auch die Oberfläche 2b, die der Oberfläche 2a gegenüberliegt, eben ausgeführt und gegenüber einer seitlichen Oberfläche (einer Mantelfläche) 2e der Mutter 1 verbreitert. Bevorzugt hat die Oberfläche 2b eine runde oder kreisförmige und damit ergonomisch geformte Grundfläche.

Die seitliche (Mantel-)fläche 2e weist eine deutliche Verjüngung zwischen den beiden (längs-)axialen Endabschnitten der Mutter 1 auf, so dass die Mutter 1 möglichst wenig Gewicht bei unbeeinträchtigter mechanischer Belastbarkeit aufweist. Die Mantelfläche 2e weist in Richtung der Oberfläche 2a bevorzugt die gezeigten Flügel auf, deren Höhe/Länge in axialer Längsrichtung der Mutter 1 von der Oberfläche 2a ausgehend bevorzugt zwischen 10 und 40 mm ist, besonders bevorzugt zwischen 10 und 30 mm und ganz besonders bevorzugt zwischen 15 und 25 mm ist.

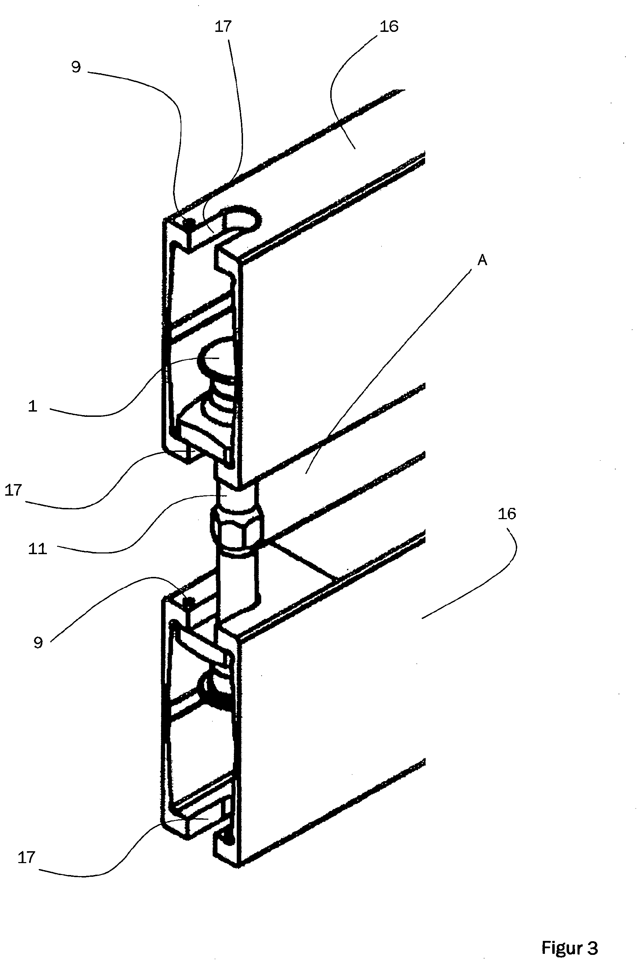

Die Figur 2 zeigt des Weiteren die Klemmvorrichtung 10 und zwei Traversenhohlprofile 16. Figur 2a zeigt zunächst eine Frontansicht des Traversenhohlprofiles 16, aus der ersichtlich ist, dass an einer Außenkante des Traversenhohlprofiles 16 (bezogen auf die Längsachse, die senkrecht zur Figurenebene steht) zwei Aussparungen 17 einander gegenüberliegend angeordnet vorgesehen ist. Die Aussparung 17 dient der Aufnahme der Klemmvorrichtung 10, wie es die Figuren 2b, 2c und 3 darstellen. Ferner wird aus Figur 2a die tonnenförmige Gestalt eines Innenquerschnitts 16a des Traversenhohlprofils 16 ersichtlich, die eine Gewichtsreduktion der Traversenhohlprofile 16 mit sich bringt, da eine Wandstärke belastungsangepasst reduziert ist. Die dünnste Wandstärke der Traversenhohlprofile 16 ist bevorzugt zwischen 1 und 15 mm, besonders bevorzugt zwischen 3 und 10 mm und ganz besonders bevorzugt zwischen 4 und 8 mm. Die Aussparung 17 hat bevorzugt eine Breite zwischen 20 und 80 mm, besonders bevorzugt zwischen 30 und 50 mm und ganz besonders bevorzugt zwischen 35 und 45 mm. Die Aussparung 17 ist bevorzugt bis zu 80 mm tief, besonders bevorzugt bis zu 70 mm tief und ganz besonders bevorzugt bis zu 60 mm tief. Eine Höhe des Traversenhohlprofiles liegt bevorzugt zwischen 75 und 800 mm, besonders bevorzugt zwischen 100 und 500 mm und ganz besonders bevorzugt zwischen 125 und 425 mm. Die Wandstärke der Abschnitte, in denen jeweils eine Aussparung 17 angeordnet ist, liegt bevorzugt zwischen 10 und 45 mm, besonders bevorzugt zwischen 15 und 40 mm und ganz besonders bevorzugt zwischen 20 und 30 mm. Ein Abschnitt, in dem die Aussparung 17 angeordnet ist, bildet eine kraftaufnehmende Seite des Traversenhohlprofils 16.

Figur 2b zeigt einen Schnitt durch einen Teil der Mutter 1 bzw. deren Körper 2 und durch zwei Traversenhohlprofile 16. In Figur 2b ist die Klemmvorrichtung 10 bereits mit den Traversenhohlprofilen 16 verbunden, wobei jeweils ein Längsabschnitt des Zugbolzens 11 in einer Aussparung 17 der Traversenhohlprofile 16 angeordnet ist. Die Oberfläche 2a der Muttern 1 liegen jeweils auf einer Innenseite des Traversenhohlprofils eben auf.

Das Schnittbild der Figur 2b zeigt zudem Bohrungen 9 zur Aufnahme eines Stiftes 6, der senkrecht von der Oberfläche 2a der Mutter 1 absteht und in die Bohrung 9 einsteckbar ist, um eine Ablgeitsicherung der Mutter 1 in dem Traversenhohlprofil 16 herzustellen.

Ferner zeigt die Figur 2b, dass die Form der Außenflächen und/oder Mantelfläche 2e der Mutter 1 im unteren Bereich des Mutterkörpers 2 optimal an die Innenfläche des Traversenhohlprofils 16 angepasst sein kann. Insbesondere können sich die abgerundeten Kanten 2c der Mutter 1 passgenau in die Radien der Ecken des Innenquerschnittes 16a des Traversenhohlprofiles 16 einfügen. Es kann jedoch auch ein Luftspalt zwischen den Innenseiten der Seitenwände des Traversenhohlprofils 16 und der Mutter 1 vorgesehen sein bzw. vorliegen. Die Radien der Ecken des Innenquerschnittes 16a liegen bevorzugt zwischen R1 und R8 und besonders bevorzugt zwischen R4 und R7. Dadurch entstehen bei der Übertragung von Kräften von der Mutter 1 auf das Traversenhohlprofil 16 keine Spannungsspitzen. Die Mutter 1 ist wie gezeigt vollständig innerhalb eines Hohlraumes des Traversenhohlprofiles 16 angeordnet. Die Traversenhohlprofile 16 sind besonders bevorzugt so ausgelegt, dass jeweils an einem oberen und einem unteren Abschnitt des Innenquerschnittes 16a eine Mutter 1 anordenbar ist. Figur 2c zeigt darüber hinaus eine Frontalansicht der montierten Klemmvorrichtung 10 mit den Traversenhohlprofilen 16.

Weiter zeigt der Schnitt A-A der Figur 2b Details der Mutter 1 bezüglich der Zugangsbohrung 5, der Anordnung des Fixierelementes 7 innerhalb der Nut 4 und der Zugangsbohrung 5 und bezüglich eines Befestigungsmittels 8, das mit dem Fixierelement 7 verbunden sein kann.

Das Befestigungsmittel 8 hat ein Außengewinde, dass mit einem Innengewinde 5a der Durchgangsbohrung 5 in Kontakt steht und ein Verstellen der Relativposition des Befestigungsmittels 8 innerhalb der Durchgangsbohrung 5 erlaubt. Besonders bevorzugt wird bei einer Erstmontage der Klemmvorrichtung 10 das Fixierelement 7 in die Zugangsbohrung 5 eingeschoben. Danach kann das Befestigungsmittel 8, beispielsweise eine Schraube, in die Zugangsbohrung 5 eingeschraubt werden. Durch das Einschrauben des Befestigungsmittels 8 wird das Fixierelement 7 in seine Endposition geschoben, in der das Fixierelement 7 eine Schlinge um den Zugbolzen 11 bildet und den Zugbolzen 11 so unverlierbar mit der Mutter 1 sichert. Wenn verhindert werden soll, dass die Position des Befestigungsmittels 8 nachträglich nicht mehr verändert werden kann, so kann die Position des Befestigungsmittels 8 in der Zugangsbohrung 5 abschließend mit einem Klebstoff fixiert werden.

Alternativ zu dem vorbeschriebenen Beispiel kann das Befestigungsmittel 8 beispielsweise auch eine Hülse mit Außengewinde sein, die eine Aufnahme für das Befestigen eines Endes des Fixierelementes 7 aufweist. Das Fixierelement 7 kann mit dem Befestigungsmittel 8 beispielsweise mittels einer Klebeverbindung oder einer Klemmverbindung fest verbunden sein.

Der Schnitt A-A zeigt die Anordnung des Befestigungsmittels 8 und des des Fixierelementes 7 in der Durchgangsbohrung 5 bzw. der Nut 4, nachdem das Befestigungsmittel 8 in seine vorbestimmte Position eingedreht worden ist. Das Fixierelement 7 verläuft bis zu seinem entgegengesetzten Ende um die Nut 4 herum, so dass eine Schlinge geformt wird. Die Schlinge umgreift den Durchmesser des Sackloches 3. Das andere Ende des Fixierelementes 7 (also das, das nicht an dem Befestigungsmittel 8 angeordnet ist) kann innerhalb der Nut 4 mittels beispielsweise einer kraftschlüssigen oder einer formschlüssigen Verbindung fixiert sein. Beispielsweise kann die Nut 4 eine Verjüngung aufweisen, in der das Ende des Fixierelementes 7 eingeklemmt werden kann. Ferner kann die Nut 4 einen Dorn aufweisen, der das Fixierelement7 an ihrem Ende aufspießt und so festhält. Eine stoffschlüssige Verbindung kann beispielsweise mittels einer Klebeverbindung realisiert sein.

Gemäß dem alternativen Beispiel, bei der das Befestigungsmittel 8 und ein Ende des Fixierelementes 7 fest miteinander verbunden sind, kann das Befestigungsmittel 8 nach außen in Richtung einer Öffnung 5b der Zugangsbohrung 5 gedreht werden. Da das entgegengesetzte Ende des Fixierelementes 7 in der Nut 4 fixiert sein kann, kann das Fixierelement 7 gedehnt und der Durchmesser der Schlinge des Fixierelementes 7 verringert werden. Dieses Einschnüren der Schlinge kann bei einem in das Sacklock 3 eingedrehten Zugbolzen 11 dazu genutzt werden, dass das Fixierelement 7 sich noch fester um den Zugbolzen 11 herum anordnet und damit die Mutter 1 noch sicherer festhält . Ein tieferes Eindrehen des Befestigungsmittels 8 in die Zugangsbohrung 5 kann die Sicherung des Zugbolzens 11 wieder lösen, indem die Schlinge geweitet wird.

Zudem kann das Fixierelement 7 gemäß beiden oben beschriebenen Alternativen ein Eindringen von Schmutz- und Staubpartikeln verhindern.

Darüber hinaus zeigt der Schnitt A-A auch den fest mit der Mutter 1 verbundenen Stift 6, der in das oben beschriebene Loch/Bohrung 9 des Traversenhohlprofiles 16 eingesteckt werden kann, um eine Abgleitsicherung herzustellen.

Figur 3 zeigt schließlich die montierte Klemmvorrichtung 10 mit zwei Traversenhohlprofilen 16 in der Perspektive. Die Klemmvorrichtung 10 ist in die Aussparungen 17 eingesetzt und die Muttern 1 liegen eben mit einer Innenseite der Traversenhohlprofile 16 auf. Die Muttern 1 sind derart in die Traversenhohlprofile 16 eingesetzt, dass der Stift 6 jeweils in die Bohrung 9 eingreift. Die Montage der Klemmvorrichtung 10 und der Traversenhohlprofile 16 erfolgt erfindungsgemäß besonders wenig aufwendig: Die vormontierte Klemmvorrichtung 10 kann in die Aussparungen 17 eingesetzt werden. Danach kann an dem Außensechskant 15 mit einem Maulschlüssel angesetzt werden und mittels einer Drehung des Zugbolzens 11 dieser in die gewünschte Stellung in das Sackloch 3 der Muttern 1 eingeschraubt bzw. verspannt werden. Aufgrund der bevorzugten Gegenläufigkeit der Gewinde 3a der oberen und unteren Mutter 1 erfolgt mit einer Drehbewegung in eine Drehrichtung ein Verspannen des Zugbolzens 11 an beiden seiner Enden, so dass eine sehr zeiteffiziente Montage möglich ist. Bei der oben beschriebenen Alternative, bei der das Befestigungsmittel 8 und das Fixierelement 7 fest miteinander verbunden sind, werden die Muttern 1 in den Traversenhohlprofilen 16 bevorzugt so ausgerichtet, dass die Öffnung 5a der Zugangsbohrung 5 in Richtung der offenen Seite der Traversenhohlprofile 16 zeigt. Dies ermöglicht nach dem Einschrauben des Zugbolzens 11, dass in einem weiteren Arbeitsschritt das Befestigungsmittel 8 in der Zugangsbohrung 5 so relativ bewegt werden kann, dass das Fixierelement 7 eingeschnürt wird und sich noch enger um den Längsabschnitt 13 des Zugbolzens 11 legt. Der Längsabschnitt 13 ist bevorzugt zwischen 10 und 50 mm lang und besonders bevorzugt zwischen 15 und 30 mm lang. Wenn das Befestigungsmittel 8 und das Fixierelement 7 gemäß der weiteren beschriebene Alternative nicht fest miteinander verbunden sind und das Befestigungsmittel 8 in einer vorbestimmten Position während der Vormontage fixiert worden ist, entfällt der letztgenannte Arbeitsschritt, so dass die Montage der Klemmvorrichtung 10 an den Traversenhohlprofilen 16 noch zeiteffizienter durchgeführt werden kann.

Weiter zeigt die Figur 3 einen Zwischenraum A, der zwischen den beiden Traversenhohlprofilen 16 angeordnet ist. Im montierten Zustand einer mobilen Vulkanisierpresse 20 sind in diesem Zwischenraum A insbesondere die Heizplatten, das oder die Druckkissen und das zu vulkanisierende Produkt, z.B. ein Förderbandgurt, zwischen den Traversenhohlprofilen eingelegt bzw. eingeklemmt. Die Figur 3 zeigt ein Längsende einer Einheit der Vulkanisierpresse 20, die jeweils ein oberes und unteres Traversenhohlprofil 16 mit der an den beiden Längsenden angeordneten Klemmvorrichtung 10 umfasst. Die Figur 3 zeigt dabei nur ein Längsende der Einheit, die an einer Stelle entlang der Längsrichtung der Traversenhohlprofile 16 abgeschnitten gezeigt ist. Das andere Längsende der Einheit ist gespiegelt zu dem in Figur 3 gezeigten Ende aufgebaut und weist ebenfalls eine Klemmvorrichtung 10 auf, die in die Aussparung 17 des oberen und unteren Traversenhohlprofiles 16 eingesetzt ist. Die montierte Vulkanisierpresse 20 umfasst im montierten Zustand über eine Vielzahl von in der Querrichtung der Traversenhohlprofile 16 zueinander beanstandet angeordneten Einheiten, wie sie oben beschrieben wurden und von der ein Längsende die Figur 3 wiedergibt.

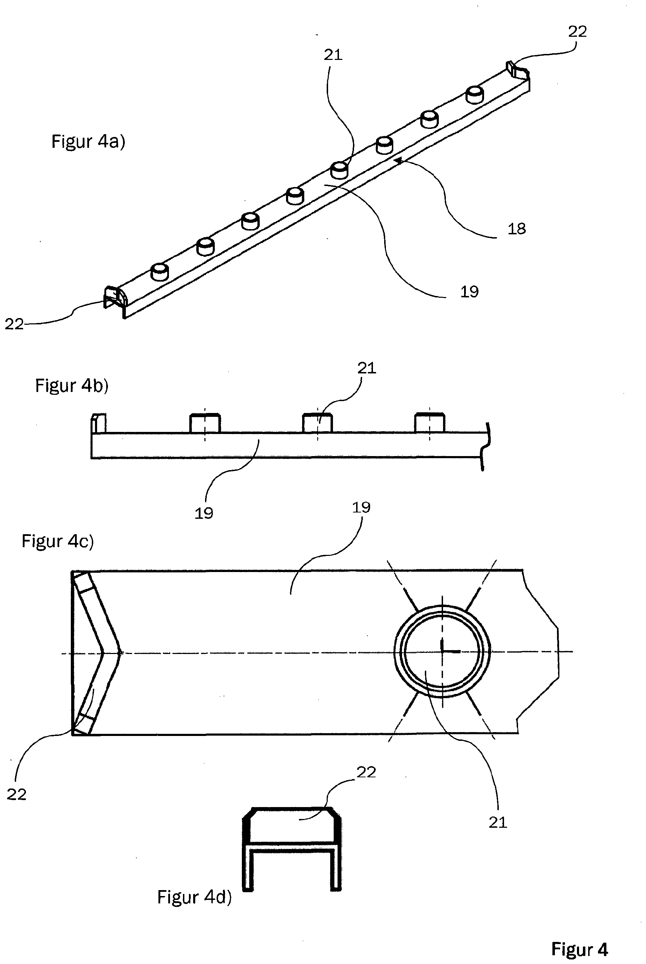

Weiterhin zeigt die Figur 4 einen Teil einer mobilen Vulkanisierpresse 20, der ein Rack 18 betrifft. Das Rack 18 erleichtert das genaue Positionieren und Ausrichten der Traversenhohlprofile 16. Eine Vulkanisierpresse 20 weist eine Vielzahl Traversenhohlprofile 16 auf, die schräg und parallel zueinander jeweils ober- und unterhalb der Heizplatten angeordnet sind. Das Rack 18 gibt dabei die Ausrichtung der Traversenhohlprofile 16 vor.

Das gezeigte Rack 18 weist einen Längskörper 19 mit optionalen Vorstehungen 21 auf, die bevorzugt angeschweißt oder angelötet sind. Ebenso ist jeweils an einer Endkante des Längskörpers 19 ein pfeilförmiges Blech 22 befestigt, das die Schrägstellung der auf dem Rack 18 anzuordnenden Traversenhohlprofile 16 vorgibt. Vorteilhaft ist die Pfeilform deshalb, da das Rack 18 damit das Anordnen der Traversenhohlprofile 16 für beide Förderrichtungen/Schrägstellungen erlaubt. Die Vorstehungen 21 können bevorzugt dann vorgesehen sein, wenn die Traversenhohlprofile 16 beispielsweise nicht gezeigte Aufnahmen aufweisen, in die die Vorstehungen 21 eingeführt werden können. Die Vorstehungen 21 verhindern dann ein Verrutschen der Traversenhohlprofile 16 und geben deren Positionierung vor.

Figur 4a zeigt ein Rack 18 in der Perspektive. Eine Seitenansicht, die auf einer Seite abgeschnitten ist, zeigt die Figur 4b. Eine vergrößerte Teilansicht in der Vogelperspektive zeigt die Figur 4c, die die Pfeilform des pfeilförmigen Elementes 22 veranschaulicht. Figur 4d zeigt ferner eine Frontalansicht des Racks 18 mit dem pfeilförmigen Element 22.

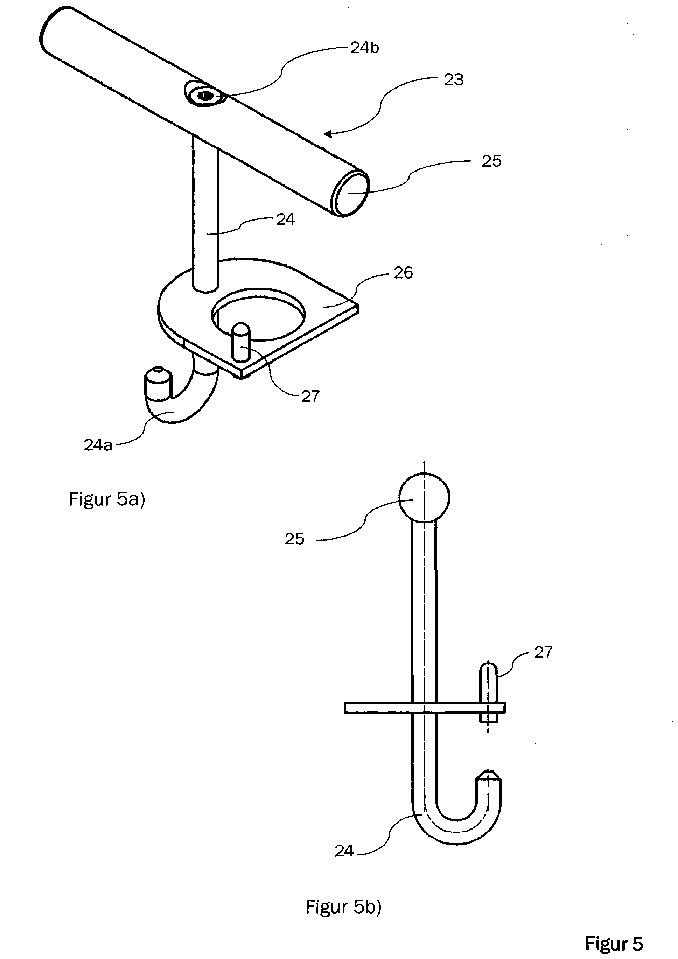

Figur 5 zeigt mit den zwei Ansichten der Figuren 5a und 5b eine Tragevorrichtung 23 für die erfindungsgemäße mobile Vulkanisierpresse 20 und deren Teilkomponenten. Die Tragevorrichtung 23 weist einen Haltegriff 25 auf, der mit einem Hauptkörper 24 drehbar verbunden ist. Dazu ist eine Verbindungsschraube 24b vorgesehen, die den Haltegriff 25
von der Tragevorrichtung 23 abrutschen können. Abhängig davon, welche Abmessungen das zu transportierende Bauteil aufweist, kann der Haltegriff 25 mittels einer Drehung relativ zu dem Hakenbereich 24a oder dem Element 26 ausgerichtet werden, so dass jederzeit ein optimales Greifen und Tragen ermöglicht wird.

Zusammenfassend werden somit eine Mutter 1, eine Klemmvorrichtung 10 und eine mobile Vulkanisierpresse 20 bereitgestellt, die weniger aufwendig handhabbar sind und dabei einen höheren Arbeitsschutz bieten, robuster und damit auch unter harschen Einsatzbedingungen langlebiger sind und gleichzeitig weniger Gewicht aufweisen.

## Patentansprüche

1. Klemmvorrichtung (10) für eine mobile Vulkanisierpresse (20) mit zumindest einer Mutter (1), und einem Zugbolzen (11), wobei
der Zugbolzen (11) an seinen beiden axialen Endabschnitten jeweils ein Außengewinde (12) aufweist, so dass an jeweils einem axialen Ende des Zugbolzens (11) die Mutter (1) mittels einer Schraubverbindung anordenbar ist,
**gekennzeichnet dadurch, dass** die Mutter:
- einen Mutterkörper (2), der ein Sackloch (3) mit einem Innengewinde (3a) zur Aufnahme eines Zugbolzens (11) aufweist,
- eine Nut (4), und
- eine Zugangsbohrung (5) in dem Mutterkörper (2) zur Aufnahme eines Fixierelementes (7) aufweist, wobei
die Nut (4) in einem Umfangsabschnitt des Sackloches (3) angeordnet ist und die Zugangsbohrung (5) eine Außenseite des Mutterkörpers (2) mit der Nut (4) verbindet,
ein Fixierelement (7) derart in der Nut (4) und der Zugangsbohrung (5) angeordnet ist, dass das Fixierelement (7) zumindest einen Teilabschnitt der Zugangsbohrung (5) und/oder der Nut (4) belegt, und
das Fixierelement (7) mit einem Befestigungsmittel (8) verbunden ist, wobei eine Relativposition des Befestigungsmittels (8) in der Zugangsbohrung (5) einstellbar ist, und wobei das Befestigungsmittel (8) derart mit dem Fixierelement (7) verbunden ist, dass eine Veränderung der Relativposition des Befestigungsmittels (8) eine Dehnung oder eine Stauchung des Fixierelementes (7) herbeiführt.

2. Klemmvorrichtung (10) gemäß Anspruch 1, **gekennzeichnet dadurch, dass** das Befestigungsmittel (8) in der Zugangsbohrung (5) angeordnet ist und das Fixierelement (7) zumindest einen Teilabschnitt der Zugangsbohrung (5) belegt und es die Nut (4) vollständig belegt.

3. Klemmvorrichtung (10) gemäß zumindest einem der vorangegangenen Ansprüche, **gekennzeichnet dadurch, dass**
das Fixierelement (7) bandförmig ist und das Material des Fixierelementes (7) Filz oder Kunststoff aufweist, wobei ein bevorzugter Kunststoff ein Elastomer umfasst, oder das Fixierelement (7) eine Vielzahl Kugeln aufweist, die bevorzugt aus Kunststoff oder Metall bestehen.

4. Klemmvorrichtung (10) gemäß zumindest einem der vorangegangenen Ansprüche, **gekennzeichnet dadurch, dass**
eine Fläche der beiden Oberfläche (2a, 2b) der Axialenden des Mutterkörpers jeweils größer ist als eine Querschnittsfläche des Sackloches (3).

5. Klemmvorrichtung (10) gemäß zumindest einem der vorangegangenen Ansprüche, **gekennzeichnet dadurch, dass**
ein Stift (6) fest mit dem Mutterkörper (2) verbundenen ist, der von der Oberfläche (2a), in der die Öffnung (3b) des Sackloches (3) angeordnet ist, senkrecht absteht.

6. Klemmvorrichtung (10) gemäß zumindest einem der vorangegangenen Ansprüche, **gekennzeichnet dadurch, dass**
eine Oberfläche (2a) des Mutterkörpers (2), die eine Öffnung (3b) des Sackloches (3) aufweist, eine nach außen gekrümmte Form aufweist.

7. Klemmvorrichtung (10) gemäß zumindest einem der vorangegangenen Ansprüche, **gekennzeichnet dadurch, dass** in einem mittig angeordneten Längsabschnitt des Zugbolzens (11) ein Außensechskant (15) angeordnet ist, wobei
der Außensechskant (15) integral mit einem Zugbolzenkörper des Zugbolzens (11) ist, wobei der Zugbolzenkörper ein Hohlkörper ist, der bevorzugt aus hochfestem Stahl besteht.

8. Klemmvorrichtung (10) gemäß zumindest einem der vorangegangenen Ansprüche, **gekennzeichnet dadurch, dass**
die beiden Außengewinde (12) des Zugbolzens (11) gegenläufig sind.

9. Mobile Vulkanisierpresse (20) mit
- zumindest einer Klemmvorrichtung (10) gemäß zumindest einem der voranstehenden Ansprüche 1 bis 8, und
- zumindest zwei Traversenhohlprofilen (16) zur Aufnahme der Klemmvorrichtung (10).

10. Mobile Vulkanisierpresse (20) gemäß Anspruch 9, **gekennzeichnet dadurch, dass**
das Traversenhohlprofil (16) an beiden axialen Längsenden zumindest eine Aussparung (17) aufweist, deren Breite größer oder gleich ist im Vergleich zu einem vordefinierten Längsabschnitt des Zugbolzens (11), und das Traversenhohlprofil (16) einen rechteckigen Außenquerschnitt sowie einen Innenquerschnitt aufweist, der tonnenförmig ist und abgerundete Ecken hat, wobei
eine Querschnittsfläche des Innenquerschnittes so groß ist, dass zumindest eine Mutter (1) darin anordenbar ist.

11. Mobile Vulkanisierpresse (20) gemäß zumindest einem der vorangegangenen Ansprüche 9 bis 10, **gekennzeichnet durch**
ein Rack (18), das einen Längskörper (19) aufweist, der an einer Oberseite eine Vielzahl Vorstehungen (21) aufweist, wobei an beiden Längsenden des Längskörpers (19) des Racks (18) jeweils ein pfeilförmiges Abschlussblech (22) angeordnet ist.

## Claims

1. A clamping device (10) for a mobile vulcanizing press (20) with at least one nut (1) and a tension bolt (11), wherein
said tension bolt (11) has an external thread (12) at each of both its axial end portions, so that said nut (1) may be arranged via a screw connection at one of said tension bolt's (11) axial ends, respectively,
**characterized in that** said nut includes
- a nut body (2), which comprises a blind hole (3) with an internal thread (3a) for receiving a tension bolt (11),
- a groove (4) and
- an entrance bore (5) in said nut body (2) for receiving a fixing element (7), wherein
said groove (4) is arranged in a circumferential portion of said blind hole (3) and said entrance bore (5) connects an outside of said nut body (2) with said groove (4),
a fixing element (7) is arranged in said groove (4) and said entrance bore (5) such that said fixing element (7) occupies at least a partial section of said entrance bore (5) and/or said groove (4), and
said fixing element (7) is connected to a fastener (8), wherein a relative position of said fastener (8) in said entrance bore (5) is adjustable and wherein said fastener (8) is connected to said fixing element (7) such that a change in the relative position of said fastener (8) causes an expansion or compression of said fixing element (7).

2. The clamping device (10) according to claim 1, **characterized in that** said fastener (8) is arranged in said entrance bore (5) and said fixing element (7) occupies at least a partial section of said entrance bore (5) and fully occupies said groove (4).

3. The clamping device (10) according to at least one of the preceding claims, **characterized in that**
said fixing element (7) is ribbon-shaped, and the material of said fixing element (7) includes felt or plastic, wherein a preferred plastic comprises an elastomer, or said fixing element (7) includes a variety of balls preferably consisting of plastic.

4. The clamping device (10) according to at least one of the preceding claims, **characterized in that**
an area of both surfaces (2a, 2b) of each of the axial ends of said nut body is larger than a cross-sectional area of said blind hole (3).

5. The clamping device (10) according to at least one of the preceding claims, **characterized in that**
a pin (6) is firmly connected to said nut body (2) perpendicularly protruding from the surface (2a) in which the opening (3b) of said blind hole (3) is arranged.

6. The clamping device (10) according to at least one of the preceding claims, **characterized in that**
a surface (2a) of said nut body (2) having an opening (3b) of said blind hole (3) has an outwardly curved shape.

7. The clamping device (10) according to at least one of the preceding claims, **characterized in that** an external hex drive (15) is arranged in a centrally arranged longitudinal section of said tension bolt (11), wherein
said external hex drive (15) is integral with a tension-bolt body of said tension bolt (11), wherein the tension-bolt body is a hollow body preferably consisting of high-strength steel.

8. The clamping device (10) according to at least one of the preceding claims, **characterized in that**
the two external threads (12) of said tension bolt (11) are opposite.

9. A mobile vulcanizing press (20) with
- at least one clamping device (10) according to at least one of the preceding claims 1 to 8 and
- at least two traverse hollow profiles (16) for receiving said clamping device (10).

10. The mobile vulcanizing press (20) according to claim 9, **characterized in that**
said traverse hollow profile (16) has at least one recess (17) at both axial longitudinal ends, the width of which is larger than or equal compared to a predefined longitudinal section of said tension bolt (11), and said traverse hollow profile (16) has a rectangular external cross-section as well as an internal cross-section being barrel-shaped and having rounded corners, wherein
a cross-sectional area of the internal cross section is so large that at least one nut (1) may be arranged therein.

11. The mobile vulcanizing press (20) according to at least one of the preceding claims 9 to 10, **characterized by**
a rack (18) having a longitudinal body (19) which has a variety of protrusions (21) on an upper surface, wherein an arrow-shaped cover plate (22) is arranged at each of both longitudinal ends of said longitudinal body (19) of said rack (18).

## Revendications

1. Dispositif de serrage (10) pour une presse de vulcanisation mobile (20), comportant au moins un écrou (1) et un tirant (11), le tirant (11) présentant à ses deux portions d'extrémité axiales un filetage respectif (12), de sorte que l'écrou (1) peut être agencé à une extrémité axiale respective du tirant (11) par une liaison vissée,
**caractérisé en ce que**
l'écrou comprend :
- un corps d'écrou (2) présentant un trou borgne (3) avec un taraudage (3a) pour recevoir un tirant (11), et
- une rainure (4), et
- un perçage d'accès (5) dans le corps d'écrou (2) pour recevoir un élément de fixation (7),
dans lequel
la rainure (4) est disposée dans une portion circonférentielle du trou borgne (3), et le perçage d'accès (5) relie un côté extérieur du corps d'écrou (2) à la rainure (4),
un élément de fixation (7) est disposé dans la rainure (4) et dans le perçage d'accès (5) de telle sorte que l'élément de fixation (7) occupe au moins une portion partielle du perçage d'accès (5) et/ou de la rainure (4), et
l'élément de fixation (7) est relié à un moyen de fixation (8), une position relative du moyen de fixation (8) dans le perçage d'accès (5) étant réglable, et
le moyen de fixation (8) est relié à l'élément de fixation (7) de telle sorte qu'une modification de la position relative du moyen de fixation (8) provoque une extension ou une compression de l'élément de fixation (7).

2. Dispositif de serrage (10) selon la revendication 1,
**caractérisé en ce que**
le moyen de fixation (8) est disposé dans le perçage d'accès (5), et l'élément de fixation (7) occupe au moins une portion partielle du perçage d'accès (5) et occupe complètement la rainure (4).

3. Dispositif de serrage (10) selon l'une au moins des revendications précédentes,
**caractérisé en ce que**
l'élément de fixation (7) est en forme de bande, et le matériau de l'élément de fixation (7) comprend du feutre ou de la matière plastique, une matière plastique préférée comprenant un élastomère, ou l'élément de fixation (7) comprend une multitude de billes constituées de préférence en matière plastique ou en métal.

4. Dispositif de serrage (10) selon l'une au moins des revendications précédentes,
**caractérisé en ce que**
une surface des deux surfaces (2a, 2b) des extrémités axiales du corps d'écrou est plus grande qu'une surface de section transversale du trou borgne (3).

5. Dispositif de serrage (10) selon l'une au moins des revendications précédentes,
**caractérisé en ce que**
une tige (6) est solidaire du corps d'écrou (2) et fait saillie verticalement de la surface (2a) dans laquelle est ménagée l'ouverture (3b) du trou borgne (3).

6. Dispositif de serrage (10) selon l'une au moins des revendications précédentes,
**caractérisé en ce que**
une surface (2a) du corps d'écrou (2) présentant une ouverture (3b) du trou borgne (3) présente une forme incurvée vers l'extérieur.

7. Dispositif de serrage (10) selon l'une au moins des revendications précédentes,
**caractérisé en ce que**
qu'un hexagone mâle (15) est disposé dans une portion longitudinale centrale du tirant (11), l'hexagone mâle (15) étant réalisé intégralement avec un corps du tirant (11), le corps du tirant étant un corps creux constitué de préférence en acier à haute résistance.

8. Dispositif de serrage (10) selon l'une au moins des revendications précédentes,
**caractérisé en ce que**
les deux filetages (12) du tirant (11) ont des pas en sens inverses.

9. Presse de vulcanisation mobile (20) comprenant
- au moins un dispositif de serrage (10) selon l'une au moins des revendications précédentes 1 à 8, et
- au moins deux profilés transversaux creux (16) pour recevoir le dispositif de serrage (10).

10. Presse de vulcanisation mobile (20) selon la revendication 9,
**caractérisée en ce que**
ledit profilé transversal creux (16) présente aux deux extrémités longitudinales axiales au moins une échancrure (17) dont la largeur est supérieure ou égale par comparaison à une portion longitudinale prédéfinie dudit tirant (11), et ledit profilé transversal creux (16) présente une section transversale extérieure rectangulaire et une section transversale intérieure qui est en forme de tonneau et qui présente des coins arrondis,
une surface de section transversale de la section transversale intérieure présente une taille telle qu'au moins un écrou (1) peut être placé dans celle-ci.

11. Presse de vulcanisation mobile (20) selon l'une au moins des revendications précédentes 9 à 10,
**caractérisée par**
un support (18) comprenant un corps longitudinal (19) qui présente une multitude de saillies (21) sur un côté supérieur, une tôle de terminaison respective (22) en forme de flèche étant disposée aux deux extrémités longitudinales du corps longitudinal (19) du support (18).
